# EUROPEAN PATENT APPLICATION

(11) **EP 0 989 421 A1**
(43) Date of publication of application: **29.03.2000**
(21) Application number: 99115648.0
(22) Date of filing: 07.08.1999
(51) Int. Cl.: G02B 6/245

(54) **Sheath cutting device especially for optical fiber cables**

(30) Priority: 31.08.1998 IT RN980030
(71) Applicant: Giannini, Stefano, 47900 Rimini (RN) (IT)
(72) Inventor: Giannini, Stefano, 47900 Rimini (RN) (IT)
(74) Representative: Gustorf, Gerhard, Dipl.-Ing.

(57) **Abstract**

Sheath cutting device, especially for optical fiber cables, including a pair of valves (2, 3) hinged, shaped and reciprocally locking to trap a segment of the cable (1) between them, engaged by entrainment gears (12) against a pair of opposing, adjustable and positionable blades (18, 19).

## Description

### Background of the invention

Optical fiber cables are usually composed of bundles of fibers wound spirally around a core and covered in a plastic sheath: This sheath must be removed in relatively long segments, stripping the fibres when it is necessary to connect cables and create derivations.

### Identification of the specific technical problem

Tools used in the known technique for cutting said sheaths are not practical and the tips must out of necessity be used. It is therefore not possible to use them to strip middle segments of cable; it is necessary to cut the cable in order to use sheath cutters according to the known technique.

### Aims of the invention

- The principal aim of the present invention is therefore, in the situation described above, to provide a device for stripping cables, particularly optical fiber cables, which will be effective and simple to use and will not require the cutting of the cables themselves;
- another aim of the present invention is to attain the above aim by constructing a polyvalent device which takes into account the cables on which it can be used and the sectors in which it can be used;
- a further aim of the present invention is to attain the above aims by constructing a simple and effective device, safe to use and relatively low in cost, taking into consideration the practical results which it will offer.

### Summary of the concept

- These and other aims have all been reached by the sheath cutting device, especially for optical fiber cables, including a pair of valves (2, 3) hinged, shaped and reciprocally locking to trap a segment of the cable (1) between them, engaged by entrainment gears (12) against a pair of opposing, adjustable and positionable blades (18, 19).

### Identification of the attached drawings

- Further characteristics and advantages of the device according to the present invention will become evident from the detailed description which follows of one preferred but not exclusive embodiment, which is shown as an example but is not to be considered limiting, in the two Sheets of drawings attached, in which:
   - Figure 1 shows a perspective view of the device according to the present invention in the open position;
   - Figure 2 shows a perspective view of the device according to the present invention in the closed position.

### Static description of the embodiment

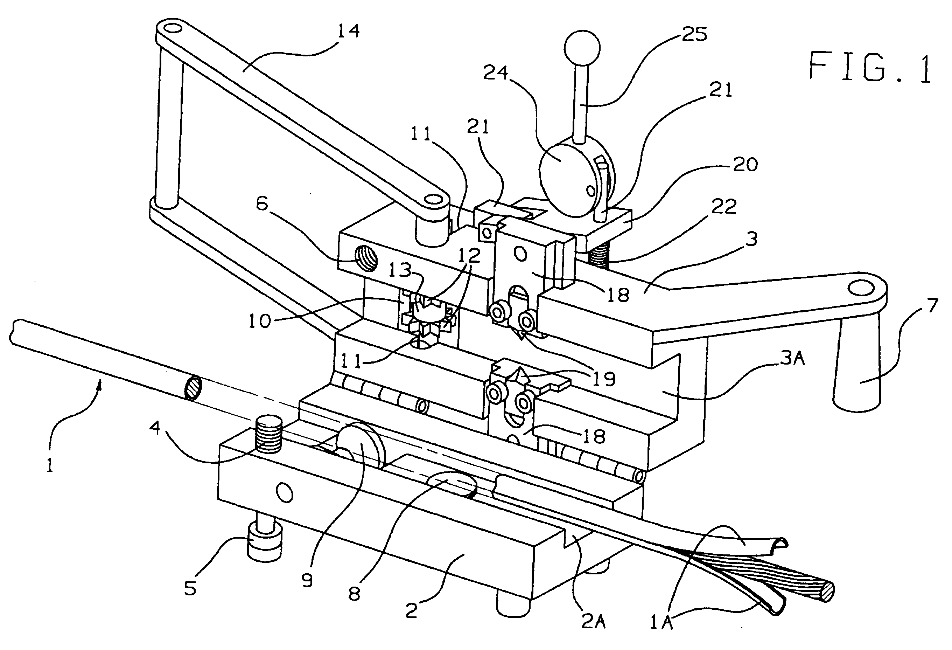

With reference to these figures, and in particular to Figure 1, (1) schematically shows the overall optical fiber cable and (1A) shows the relative external sheath, made of plastic material as is usual.

The cable 1 is shown positioned between two valves 2 and 3 reciprocally hinged, forming the supporting structure of the sheath cutting device according to the present invention, with respective longitudinal seats 2A and 3A to receive it.

The lower valve 2 is fitted with a passing screw 4, whose shoulder 5 forms one of the relative knob feet, ready to be screwed into hole 6 in the upper valve 3. In order to lock the two valves together, it is also fitted with a fixed handle 7 for gripping the entire device.

The lower valve 2 is also fitted with a further passing screw 8, for the local adjustable elevation of the cable 1, deriving from the bottom of the relative seat 2A, where a concave roller 9 for holding and guiding the cable 1 is also fitted. The respective positions will be clarified as the functional description evolves.

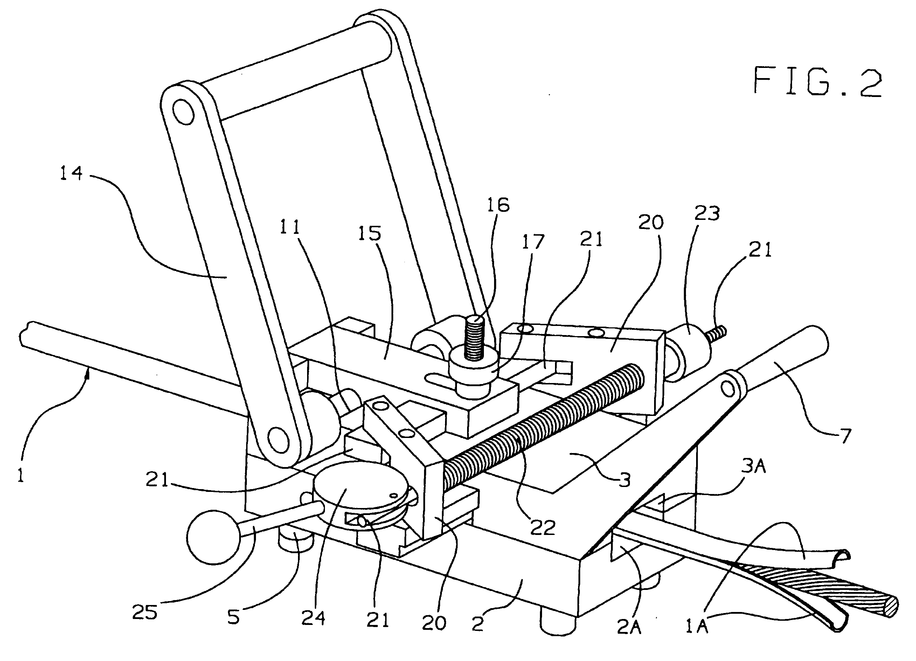

On the bottom of the seat 3A of the upper valve 3 is a slot 10 with lateral cradles 11 for the housing of a coaxial pair of gears 12 and the relative hub 13, which should be fitted with a unidirectional rotation device, apically connected to a handle 14 and trapped by an upper shutter 15 adjustably held by the shoulder screw 16 with knob 17 (see also Figure 2).

The upper valve 3 also has two opposing slides 18 on the sides of the relative seat 3A, internally fitted with apical blades 19, connected to external levers 20 paired by a screw stay 21 with interposed helical spring 22 and adjustable setters by means of knob 23, and further compressible by means of the apical lever cam 24, 25 for the functions which will be described below.

### Dynamic description of the embodiment

Having thus concluded the static description of a preferred embodiment of the sheath cutting device according to the present invention, we move on to the dynamic description, or the relative functioning:
- the valves 2 and 3 are closed around any stretch of the optical fiber 1, without it being necessary to cut it, since the device is hinged on only one side and can be opened on the other, and the valves are reciprocally locked by means of the screw 4;
   the segment of cable 1, trapped in the tunnel formed by the seats 2A and 3A, can therefore, if necessary due to the relative dimensions, be pushed into the correct position with respect to the blades 19, for the functions which follow, by means of the positioning screws 8;
   the blades 19 are then positioned on the cable 1, in a position essentially diametrically opposed to the transverse section, by regulating the screw stay 21 which pairs the slides 18;
   on resulting contact the slides 18 are further pressed together caused by the actions of the lever cam 24, 25, which causes the blades 19 to penetrate the thickness of the sheath 1A which covers the cable 1.
- Once in this position the sheath 1A is cut longitudinally for the desired length by pushing the cable 1 against the blades 19, and in any case moving the cable 1 through the device, which may also cause the removal of the device due to the turning of the gears 12, operated by the action of the handle 14, which bite into the cable 1 on meeting the concave roller 9 suitably pressed by the screwing down of the shutter 15 by means of screw 16.

### Alternative methods of operation

- Obviously alternative embodiments, while coming within the concept of the solution described above and claimed below, the sheath cutter according to the present invention may be built with equivalent technical and mechanical characteristics, or fitted with further additional features, just as the form of the relative components may be varied according to the purpose, in particular:
- the valves can be shaped differently according to the purpose; as can the cables; the reciprocal fixing system of the valves can be conceived differently; the entrainment gears can be built and shaped differently, the device can be made completely automatic by fitting an electric motor; the slides and the relative system of adjustment can also be built differently according to the purpose.

### KEY TO NUMBERS

- 1): optical fiber cable as a whole
- 1A): relative external sheath
- 2): lower valve
- 2A): relative longitudinal seat
- 3): upper valve
- 3A): relative longitudinal seat
- 4): reciprocal valve locking screw
- 5): relative knob
- 6): relative hole
- 7): fixed handle
- 8): passing screw for local adjustable elevation of cable
- 9): concave roller for holding and guiding cable
- 10): housing slot for gears
- 11): lateral cradle for housing relative hub
- 12): gears
- 12): relative hub
- 14): relative handle
- 15): shutter holding gear pin
- 16): relative fixing screw
- 17): relative regulator knob
- 18): opposing slides
- 19): relative blades
- 20): relative external levers
- 21): screw stay of relative pairing
- 22): helical spring
- 23): knob for relative adjustment
- 24): cam
- 25): relative lever

## Claims

1. Sheath cutting device especially for optical fiber cables, which includes a pair of valves (2, 3) reciprocally hinged and lockable including a means (12) for drawing the cable between them against the opposing, adjustable and positionable cutting devices (18, 19).

2. Sheath cutting device according to claim 1, wherein said means for drawing the cable (12) are composed of at least one manually operated unidirectional rotating gear (12).

3. Sheath cutting device according to claim 1, wherein said opposing, adjustable and positionable cutting devices (18, 19) are composed of a pair of blades (19) borne by the respective slides (18).

4. Sheath cutting device according to claim 1, wherein said means for drawing the cable (12) consist of a coaxial pair of gears (12) with hub (13) fitted with a unidirectional rotation device connected to a control handle (14) and trapped by an adjustable and positionable shutter (15).

5. Sheath cutting device according to claim 1, wherein said opposing, adjustable and positionable cutting devices (18, 19) consist of two opposing slides (18) fitted with blades (19) and paired by reciprocal adjustable distance setters (21, 22, 23, 24, 25).

6. Sheath cutting device according to claim 1, wherein said opposing, adjustable and positionable cutting devices (18, 19) consist of two opposing slides (18) fitted with apical blades (19) connected to external means (20) paired by a screw stay (21) with distance setters adjustable by means of knob (23) and further compressible by means of the apical lever cam (24, 25).

7. Sheath cutting device according to claim 1, which includes means (8) for local adjustable elevation of the cable (1) between said opposing cutting devices (18, 19).
